(19) Europäisches Patentamt
European Patent Office
Office européen des brevets

(11) **EP 2 405 762 B1**

(12) **EUROPEAN PATENT SPECIFICATION**

(45) Date of publication and mention
of the grant of the patent:
**02.07.2014 Bulletin 2014/27**

(21) Application number: **09790806.5**

(22) Date of filing: **24.07.2009**

(51) Int Cl.:
*A23B 7/04* (2006.01)     *A23L 3/36* (2006.01)
*F25D 13/06* (2006.01)     *A23B 4/06* (2006.01)

(86) International application number:
**PCT/US2009/051699**

(87) International publication number:
**WO 2010/104526 (16.09.2010 Gazette 2010/37)**

(54) **FREEZER AND FREEZING METHOD**

GEFRIERSCHRANK UND GEFRIERVERFAHREN

CONGELATEUR ET PROCEDE DE CONGELATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.03.2009 US 159672 P**

(43) Date of publication of application:
**18.01.2012 Bulletin 2012/03**

(73) Proprietor: **Air Products and Chemicals, Inc.**
**Allentown, PA 18195 (US)**

(72) Inventor: **FINNIE, Christopher, John**
**Hampshire RG24 8FE (GB)**

(74) Representative: **Beck Greener**
**Fulwood House**
**12 Fulwood Place**
**London WC1V 6HR (GB)**

(56) References cited:
**EP-A- 1 426 715     US-B2- 7 296 431**

**Description**

CROSS-REFERENCE TO RELATED APPLICATIONS

This application claims the benefit of Provisional US Application No. 61/159,672 filed March 12, 2009, entitled "New Freezer".

BACKGROUND OF THE INVENTION

The present invention relates to cooling and freezing food products.

There are many ways in which products, such as food products, may be chilled or frozen. One example calls for the product to be placed into trays. In many cases, a tray is used to enhance the display of the product in the package. It may also be used to contain a fluid such as water or sauce to be chilled or frozen with the product. The tray is part of the final product packaging. Loading trays is labor intensive and is typically done for premium type products which will demand a higher price to offset the additional cost of production. The trays are then placed onto a rack, and placed into a chiller or freezer, or the trays are placed on a moving belt moving through a chiller or freezer.

Another type of freezing for a product is individual quick-frozen ("IQF"). IQF freezing of products provides products that are frozen, but not stuck together. There are several known ways that IQF product is produced. One process is to simply freeze the products without allowing them to contact each other. This may be done by spacing individual pieces of product on a freezer belt or rack so they are not in contact with each other. In most cases, this is not done for smaller products because it requires a person or people to arrange the product fed into the freezer and is an inefficient use of manpower and space, thus reducing capacity. Accordingly, as the pieces to become frozen become smaller, it becomes increasingly more time consuming and difficult to do. Another process is by placing the products into trays or compartments, which are constructed to keep the individual pieces separated. This is not a desirable process due to the additional cost, labor and increased package size.

Other methods of producing IQF products include fluidized beds, nitrogen immersion or multi-pass tunnels. All of these allow for product to be randomly placed on a belt for freezing. Movement is created between adjacent pieces of product to keep pieces of the product moving in relation to one another, to create IQF products. For example, in nitrogen immersion, the pieces are not permitted to contact each other when dropped into a nitrogen bath and are thereby frozen at the surface of the bath before they can contact and adhere to one another. Multi-pass tunnels (including flighted tunnels) drop the pieces from one belt to another repeatedly to break the product apart before it is frozen solid. However, none of these methods is suitable for processing product contained in trays, since known methods would scatter the trays and displace the product from the trays.

To efficiently process products carried on trays and IQF products, different types of equipment may be employed which are suitable for one, but not both, freezing processes. In many cases, companies make both IQF and tray types of products and attempt to have both types of products processed with the same equipment. Attempts to achieve this are done by removing or bypassing the IQF portion of the freezing line when tray product freezing is desired. This typically requires relocation of equipment and results in a reduction in production capacity due to the removal of part of the process line.

US Patent 7,296,431 discloses a freezer designed for IQF and non-IQF products. EP 1426715 discloses a freezer designed for IQF products.

BRIEF SUMMARY OF THE INVENTION

An apparatus for chilling or freezing products which may be operated in the IQF and non-IQF modes, comprising: conveyor for transporting products through a refrigeration medium, said conveyor having a top surface and a bottom surface, conveyor motor to move said conveyor; at least one agitation assembly comprising at least one cam attached to at least one camshaft, said at least one camshaft rotatably mounted below said bottom surface of said conveyor, such that the cam makes initial contact with the conveyor when its vertical component of velocity is at or near its maximum during each 360° rotation of the camshaft, and an independently controlled agitation motor operatively associated with the at least one agitation assembly to operate the agitation assembly to cause the agitation of the conveyor and the products thereon when said apparatus is operated in the IQF mode. The said at least one agitation motor is typically turned off, or otherwise idled or inactivated, when the apparatus is operated in the non-IQF mode. Also provided is an apparatus and method of chilling or freezing a food product in an apparatus comprising the steps of conveying said food product on a conveyor through said apparatus; agitating said conveyor by one or more agitation assemblies, each being operably controlled by one or more agitation motors; and turning off said one or more agitation motors to switch between IQF and non-IQF modes of operating said apparatus. This invention further provides an apparatus and method of freezing that may comprise two or more agitation assemblies of any kind that are each independently operated at different speeds.

One of the problems with the existing IQF and non-IQF freezer, for example, as disclosed in US 7296431 is that it did not provide for an independently operated agitation motor to drive the agitation assembly in the freezer and instead moved the agitation assembly with the conveyor motor. Independent operation and/or independent speed control of the agitation assembly is beneficial especially when freezing food products that may be damaged by a standard, one-size fits all, freezing process. Additionally, US 7296431 provided for the movement of the agitation assembly away from the conveyor when the agitation assembly was not used to process the non-IQF products, which provided unnecessary mechanical complication to the freezer.

This invention also provides an apparatus for chilling or freezing products comprising a conveyor and at least one mobile side guide contacting the conveyor. The mobile side guide provides a solution to the problem of food product being agitated off the conveyor and thereby wasted. Existing stationary side guides do not move with the conveyor and are therefore not well-designed to be used to keep food product on the conveyor in the areas of the conveyor that are agitated.

BRIEF DESCRIPTION OF SEVERAL VIEWS OF THE DRAWINGS

For a more complete understanding of the present invention, reference may be had to the accompanying Figures, of which:

Figure 1 shows a side view showing some internal elements of one embodiment of a freezer for chilling and freezing different types of food products including IQF food products having two agitation assemblies each comprising 3 cams.

Figure 2 shows a side view of a portion of one of the agitation assemblies shown in Figure 1 (three cams), and a side view of a portion of the conveyor at one position.

Figure 3 shows a side view of a portion of the agitation assembly (two cams), and a portion of the conveyor shown in Figure 2 at a second position.

Figure 4 is a graph of the vertical component of velocity of one cam during its 360° rotation (via the camshaft that supports the cam) during which the cam contacts the conveyor belt or moves without contact with the conveyor belt.

Figure 5 is a graph of the jerk of one cam during its 360° rotation (via the camshaft that supports the cam) during which the cam contacts the conveyor belt or moves without contact with the conveyor belt.

Figure 6 shows a front view of a mobile side guide when viewing only the mobile side guide along line F-F' as shown in Figure 7.

Figure 7 shows a partial cross-section of one side of the freezer along the line G-G' in Figure 1 showing a portion of the conveyor and one mobile side guide held by a retaining means where the bottom of the mobile side guide contacts the conveyor.

Figure 8 is a graph of the cam lift versus the camshaft rotation for one cam embodiment.

DETAILED DESCRIPTION OF THE INVENTION

The apparatus for cooling products; conveys those products, such as a tray product, in such a way so as not to disturb the product or products contained in the tray, or in such a way to selectively agitate product which is disposed upon the conveyor to be individually quick frozen (IQF). The apparatus is suitable for use in chilling and freezing food products such as for example, meat, chicken, fruits, vegetables and seafood products. As used herein, cooling refers to a temperature reduction of a product to either chilling or freezing, depending on the total heat extraction from the product. The term product will be used herein to refer to a singular product and to a collective group of product pieces which should be apparent by the context when used. The indefinite articles "a" and "an" as used herein mean one or more when applied to any feature in embodiments of the present invention described in the specification and claims. The use of "a" and "an" does not limit the meaning to a single feature unless such a limit is specifically stated. The definite article "the" preceding singular or plural nouns or noun phrases denotes a particular specified feature or particular specified features and may have a singular or plural connotation depending upon the context in which it is used. The adjective "any" means one, some, or all indiscriminately of whatever quantity. The term "and/or" placed between a first entity and a second entity means one of (1) the first entity, (2) the second entity, and (3) the first entity and the second entity.

The apparatus comprises at least one conveyor, such as at least one conveyor belt which may be an endless belt, at least a conveyor motor to drive the conveyor(s), at least one agitation assembly comprising at least one cam and at least one agitation motor to drive said at least one agitation assembly, wherein by the action of at least one cam against at least one conveyor, agitation or vibration is produced that causes intermittent contact between the conveyor and the food products in the area in which the agitation assembly (at least one cam) strikes the conveyor, while the food products are being conveyed through the cooling and freezing apparatus. When used in such a way, the apparatus is used in the IQF mode to prevent products from freezing to each other and to the conveyor. Additionally, the apparatus may be used to freeze or chill products in the non-IQF mode, that is, when agitation is not desired or necessary because products are in trays or otherwise arranged so that they will not adhere to each other. If trays are agitated the product may fall off the trays. The apparatus and method of this invention allows the flexibility for operating in the IQF mode or non-IQF mode.

The apparatus and method are useful for chilling or freezing products, and comprise a conveyor, such as a conveyor belt, that transports the products through refrigeration, such as mechanical refrigeration or a refrigerated medium for chilling or freezing the products, but with the additional feature of actuating or agitating the conveyor through an agitation assembly, when desired. In certain embodiments, the agitation assembly comprises at least one camshaft having at least one cam and an independent agitation motor attached to the at least one camshaft via drive means, which may be one or more belts and/or chains (drive means). The camshafts of the agitation assembly are mounted below the bottom surface or impact surface of the conveyor in a fixed location, meaning that the conveyor and the camshafts do not move relative to each other to stop or start the agitation of the conveyor to switch between the non-IQF and IQF modes. Although the camshafts are mounted in a fixed location, they may be mounted in such a way to provide for easy removal for maintenance and cleaning, or to adjust the distance between the bottom surface of the conveyor and the heel of the cam to change the impact on the conveyor. The camshafts that are part of the agitation assembly may be oriented in any direction under the conveyor. Typically they are mounted perpendicular to the direction that the conveyor moves. The cams may rotate in any direction. Typically the camshafts with the cams attached thereto rotate in the same direction as the conveyor moves. In some embodiments, at least some of the cams that are part of the agitation assembly remain in contact with the conveyor when the freezer is operated in the non-IQF mode. In these embodiments, although the cams in contact with the conveyor may displace the conveyor from the conveyor's plane of travel as the conveyor travels over the cams in the non-IQF mode, the product on the conveyor remains in contact with the conveyor and food loaded on a tray will remain on the tray.

To operate the apparatus in the IQF mode, the one or more agitation motors are turned on, and then the agitation assembly or assemblies will make selective, intermittent contact with the conveyor, displacing the conveyor from its plane of travel, thereby displacing the products on the conveyor during freezing to prevent products from adhering to the conveyor or to other products being conveyed. Agitation of the conveyor and injection of any refrigeration medium can take place in the same or different zones having one or more agitation assemblies each with their own agitation motor to move the camshafts that are part of that agitation assembly. To stop the agitation of an agitation assembly, the agitation motor associated with that agitation assembly is turned off. Additionally, by using a variable speed agitation motor associated with an agitation assembly, the amount of agitation provided to the conveyor can be controlled. In most embodiments by controlling the variable speed motor, the rotation speed of the cams of that agitation assembly may be adjusted for different products, to optimize the freezing or chilling process in the IQF-mode. It is preferred that each agitation assembly in a freezer having multiple agitation assemblies is operatively connected to an individual variable speed agitation motor that operates and controls that agitation assembly.

The apparatus can freeze and convey different types of food products, and in various product forms; so as not to adversely affect the integrity of the product while being conveyed through the freezer. The food products may be IQF or non-IQF, and by way of example, may be on a tray or not on a tray, may be raw or cooked, may require specific shape and orientation, may be breaded or unbreaded, marinated or unmarinated, or food products comprising any type of coating.

The apparatus is flexible in that it can switch between IQF and non-IQF products, including but not limited to, products that can tolerate piling or layering when loaded into the freezer, wherein they are conveyed and quick frozen by the apparatus. Examples of these products include diced ham and other meats, shredded chicken, chicken fingers, small vegetables, small fruits, diced fruits or vegetables, sliced fruits or vegetables and shrimp.

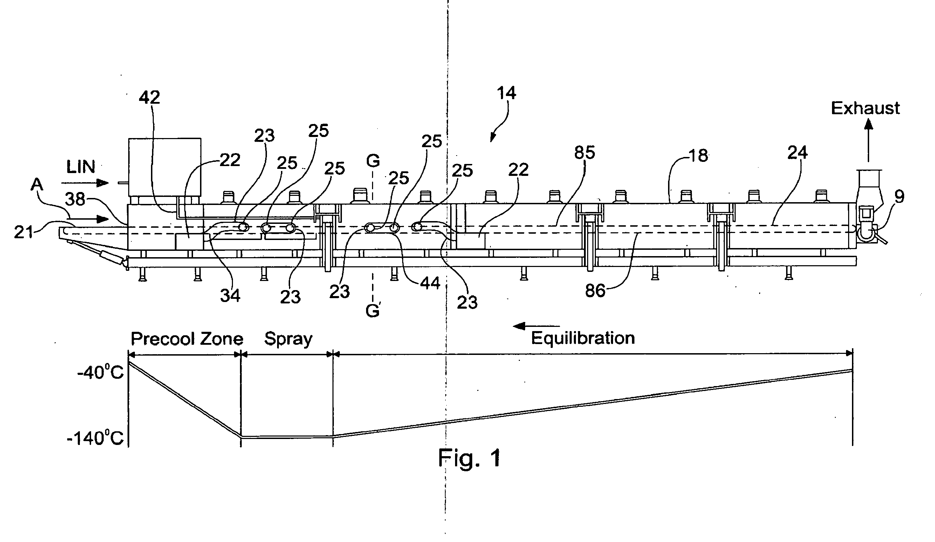

The apparatus and method of this invention may employ the total conveyor area for utilization of the capacity, without requiring food product to be removed from sections of the conveyor between the inlet and outlet of the freezer, regardless of the product/process type. The freezing zone of the freezer may comprise a single freezing zone or multiple freezing zones wherein the temperature of the product is reduced to about or below the freezing point of the product. The apparatus of the present invention may include one or a plurality of chilling or freezing zones. One embodiment of the invention is shown in Figure 1 which shows an apparatus of the invention having a single Spray zone (as labeled) in which the refrigeration medium is sprayed on the product on the conveyor. The refrigeration medium may be carbon dioxide or nitrogen or other cooled or cryogenic fluid.

In one embodiment of the apparatus, the agitation assembly utilizes at least one cam, each one of which may be attached or otherwise connected to one or more camshafts which are operatively connected for rotation to an agitation motor via one or more drive means such as one or more chains or one or more drive belts. In one embodiment, one camshaft is connected to the agitation motor via a drive means, and that camshaft is connected to one or more other camshafts that are part of the same agitation assembly by other drive means. The apparatus may have a conveyor motor to drive the conveyor and one or more agitation motors to drive the one or more agitation assemblies. Examples of motors that can be used as the agitation motors of this invention may include SEW Eurodrive's 2.2 kW foot mounted gearmotor R27 D190L2 with reduction gearbox or SEW Eurodrive's 2.2kW flange mounted R27 DT90L2 gearmotor. Each outputs 42 Nm of torque at an output speed of 502 RPM. The cam has an irregular form such that its motion imparts an upward and forward motion to the conveyor when it intermittently contacts it. The agitation assembly imparts to the conveyor a vertical component of velocity and maximum vertical displacement. Each of the one or more cams on each of the one or more camshafts contact the conveyor at select time intervals. In certain embodiments, a pulse like motion may be produced through the conveyor (and such motion observed) when one camshaft having one or more cams thereon contacting the conveyor is out of phase with at least one other camshaft having one or more cams thereon.

The apparatus may comprise more than one (or a plurality of) agitation assemblies each of which comprises one or more (or a plurality of) camshafts having one or more (or a plurality of) cams thereon and each driven by a separate agitation motor. The cams and/or the camshafts of the more than one agitation assemblies may be installed into the freezer such that the agitation is out of phase, whereby a pulse like motion is set up through the portion of the conveyor that is agitated. Additionally, the amplitude and the frequency of the pulse may be varied by mounting the camshafts and thereby the cams closer to or further from the conveyor or adjusting the speed at which the camshafts and thereby the cams in the one or more of the agitation assemblies in the freezer are driven by the one or more agitation motors that drive the agitation assemblies.

The agitation of the product may maximize product surface area exposed to the refrigeration medium, in which the refrigeration medium works either intermittently, simultaneously or continuously with the agitation. In certain embodiments of the apparatus, the one or more agitation assemblies are present either in part of or along the entire length of the conveyor and the refrigeration equipment housing. In other embodiments, the agitation assembly is present so as to provide the conveyor with alternating sections of non-agitating sections followed by agitating sections, or agitating sections followed by non-agitating sections, or in any desired arrangement.

The agitation increases the heat transfer rates by maximizing the product surface area exposed to the refrigeration medium, this is normally not achieved when the product is touching other products or parts of the conveying mechanism. This results in more uniform heat transfer, leading to shorter freezing times, improved yields, higher product quality, and better cryogenic efficiency.

Referring to Figures 1 to 3, one embodiment of a freezer 14 is shown having a housing 18, an inlet 38 at a loading zone 21 and an outlet 92. The freezer has a conveyor (belt) 24 onto which (a food) product (not shown) is placed in the loading zone 21. The food moves through the freezer on the conveyor 24 and is removed from the conveyor 24 at the outlet 92. The conveyor is unflighted, that is, it is installed into the freezer at single height or level in the freezer. Product is not dropped from one conveyor to another conveyor that is located at different heights or flights in the freezer. The conveyor is moved by a conveyor motor (not shown). The conveyor may be one or more endless belts, comprising an upper portion 85 which carries product from the loading zone 21 to the outlet 92, and a lower portion 86 that does not carry product and moves from the exit 29 to the loading zone 21.

Two agitation assemblies 34 and 44 are shown. Each agitation assembly comprises three camshafts 25 and a plurality of cams 28 (not shown in Figure 1) on each camshaft 25 located below a part of the upper portion 85 of the conveyor 24 and above a part of the lower portion 86 of the conveyor 24. Each agitation assembly further comprises an agitation motor (not shown), and one or more drive means 23 (for example, chains or drive belts) connected to the agitation motor and the camshafts to drive the camshafts 25. Each of the agitation motors are located in motor housings 22. The drive means may be enclosed in drive means housings or the agitation motor and the drive means for one or more of the agitation assemblies may be enclosed in one or more protective housings. Housings for the motor(s) and drive means and/or the location of the motor(s) and drive means outside the freezer housing 18 help to prevent the refrigeration medium from contacting and/or detrimentally impacting the motor(s) and drive means.

The agitation motors may be variable speed motors that can move the cams at various speeds and can increase or decrease the speed of the cams and therefore the impact of the one or more agitation assemblies on the conveyor as desired. The agitation motors may be independently operable, so that in the IQF mode, only one agitation assembly may be operating in a freezer, or all but one agitation assembly may be operating in a freezer, or all of the agitation assemblies may be operating at the same or different speeds. If more than one agitation assembly is operating, they may be operating at varying speeds so that the impact on the conveyor may be greater for one or more than one of the agitation assemblies in a freezer. This is particularly desirable if greater or lesser agitation is desired or necessary depending on the product. For example, if a product will be easily bruised or otherwise negatively impacted by a highly agitated conveyor before the product is frozen, low levels of agitation will be desired until the product is at least partially frozen. This will be further described below with reference to Figure 1.

The product (not shown) is introduced into the freezer 14 at the loading zone 21 via the conveyor 24. The product passes through a Precool zone and enters the Spray zone within which a refrigeration medium, for example, a cold or cryogenic fluid, typically liquid nitrogen (LIN) is sprayed on the product via the spray pipe 42. Within the Spray zone when operated in the IQF mode, the product may be mechanically agitated by agitation assembly 34, which is located closest to the freezer inlet, and may be referred to as a first agitation assembly. Freezing of the product's outer layers occurs first, forming a thin frozen crust around the product. Crust freezing provides a harder shell around the product which improves the product's resistance to mechanical damage during agitation and freezing for products that do not otherwise have good mechanical resistance, like peeled shrimps, strawberries, raspberries, other berries and shelled mussels. The crust also protects products whose appearance can be adversely affected by slower freezing, for example, chicken, mushrooms or scallops). The crust freezing with at least some agitation, prevents small and or wet products from sticking to the conveyor or forming ice bridges between adjacent product pieces. (Most food products entering the tunnel are to some degree wet. Therefore, a layer of water exists between adjacent product pieces, and also between the product pieces and the belt.) Within the Spray zone with agitation provided by the action of the agitation assembly sufficient impulse force can be provided to the individual food pieces to overcome the surface tension of the water / fluid between the product pieces to separate adjacent pieces from each other and the conveyor belt. The spray of the refrigeration medium in the Spray zone then acts to freeze the layer of water around the exterior surface of many, the majority of, or substantially all, of the plurality of individual pieces of products, such that, many, the majority or substantially all of the individual pieces are individually frozen (crust frozen) and easily separated from the other product pieces traveling on the conveyor through the freezer.

After passing through the Spray zone, the food product (which may be product pieces) which is substantially crust frozen may be subject to additional agitation provided by one or more additional agitation assemblies in the freezer that may be located in the Spray, Equilibration or other zones depending upon the freezer design. (The temperatures of the zones for the freezer shown in Figure 1 are shown in the graph below the freezer in Figure 1.) In Figure 1 as shown, the Equilibration zone comprises an agitation assembly 44, which may be referred to as a second agitation assembly, that may be inactivated or activated depending on the product and may operate at low, medium or high, or the same, lower or higher speeds as compared to the operation of the first agitation assembly 34 in the freezer 14. For products that may be detrimentally impacted before crust freezing, the second agitation assembly may be run at a higher speed (velocity) than the first agitation assembly. Alternatively, for products for which the agitation does not detrimentally impact the product or which may be more detrimentally impacted by agitation after crust freezing, the second agitation assembly may be run at a lower velocity than the first agitation assembly. The freezing process continues through the freezer, with or without additional cryogenic fluid spray and with or without the addition of, and/or operation of, one or more additional agitation assemblies. In the embodiment shown in Figure 1, the Equilibrium Zone does not include direct cryogenic fluid spray, but cryogenic fluid (liquid and/or gas) travels concurrently with the conveyor in the direction shown by arrow A from the Spray zone, therefore, the Equilibrium zone is cold. Mechanical agitation through the Equilibrium zone may be provided, as desired or needed, by the operation of the second agitation assembly 44 to separate the product into many, the majority of, or substantially all of the pieces and prevent adhesion of many, the majority of, or substantially all of the product pieces. The conveyor continues to move the product past the second agitation assembly 44 located in the Equilibration zone. Through the rest of the Equilibrium zone, the crust frozen product completes its freezing until the center of the food product reaches the desired final temperature. The product exits the freezer at outlet 92.

This invention provides that in the IQF mode, the one or more agitation assemblies may be run at the optimum speed for the product to be cooled or frozen by the apparatus. In the non-IQF mode, no agitation is provided meaning that none of the one or more agitation motors move the one or more agitation assemblies. For the one or more agitation assemblies in the IQF mode, they may independently operate at any speeds, such as low, medium or high speeds, or no speed as long as at least one agitation assembly is operating. The low, medium and high speeds are relative to the maximum speed (measured as camshaft revolutions/minute) obtainable by the fastest agitation motor in that freezer, with an agitation assembly operating at low speeds being defined as greater than 0 revolutions per minute up to 1/3 of the maximum speed, medium speeds being defined as greater than 1/3 of the maximum speed up to 2/3 of the maximum speed and high speed being defined as greater than 2/3 of the maximum speed up to the maximum speed. In the IQF mode, for example, for a freezer of this invention that has a freezer comprising a first agitation assembly and a second agitation assembly, wherein both agitation assemblies have variable speed motors that can operate at low, medium or high speeds or no speed at all, the first agitation assembly may be operated at no speed and the second agitation assembly may be operated at a higher speed, which may be low, medium or high speed; the first agitation assembly may be operated at low speed and the second agitation assembly may be operated at the same, higher or lower speed, such as no, low, medium or high speed; the first agitation assembly may be operated at medium speed and the second agitation assembly may be operated at the same, lower or higher speed, such as no, low, medium or high speed; and the first agitation assembly may be operated at high speed and the second agitation assembly may be operated at the same, lower or higher speed, such as no, low, medium or high speed.

For freezers of this invention comprising for example, three agitation assemblies each with variable speed motors, the motors may each independently operate at lower or higher speeds or the same speeds or no speed as long as at least one agitation assembly is operating in the IQF mode. If there are three agitation assemblies that can each operate at only four settings (speeds), that is at off, low, medium and high speeds, there would be sixty-three combinations of the operation of those agitation assemblies in the IQF mode. For many variable speed motors, the operation speeds have numerous running speeds, (many more than just no, low, medium and high) so there are many, many more than sixty-three combinations of the various speeds of the agitation assemblies. Further, the use of one or more variable speed and one or more single speed motors as the agitation motors in an apparatus of this invention is also contemplated by this invention.

When the freezer, as shown in Figure 1 or other embodiments of the invention, is operated in the non-IQF mode, the same zones may be used, except that the one or more agitation assemblies are not activated. When the one or more agitation assemblies are not activated, the cams are not rotated by the action of the one or more agitation motors operatively connected to the agitation assembly or assemblies. The agitation motor may also prevent the cams from moving when operating the freezer in the non-IQF mode. When the freezer is operated in the non-IQF mode, the majority, or substantially all, of the products (which includes the trays that the food products may be transported on) in contact with the conveyor remain in contact with the conveyor as they move through the freezer experiencing limited or no agitation. The limited agitation in the non-IQF mode may be due to the movement of the conveyor through the freezer and possible due to the movement of the conveyor over the stationary cams of the one or more agitation assemblies which may protrude into the plane that the conveyor travels.

The agitation assemblies of this invention can comprise any number of camshafts and cams on those camshafts. The number of cams, camshafts and agitation assemblies within a freezer may be any number and may depend upon the length and width of the freezers and the size and shape of the cams and camshafts. For tunnels up to 10 meters long, the suggested number of camshafts for the embodiment shown may be from three to twelve or more, or from six to ten camshafts, and may be part of from one to four or more, or one or two agitation assemblies. For tunnels up to 20 meters long, the number of camshafts may be from three to twenty or more, or from six to fifteen camshafts, and may be part of from one to ten or more or from one to four agitation assemblies. There may be from one to fifteen or more, or from one to ten or from two to seven cams per camshaft, spaced along the length of the camshaft; however, if the cams or the conveyor are designed to contact a larger area on the conveyor, or for the force to be translated to a wider area of the conveyor, then fewer cams may be needed, and visa-versa. Typically the cams are spaced evenly along the length of the camshaft. However, cams impacting the edge of the conveyor may be less desirable and may be avoided by moving them toward the center of the camshaft. The cams may be eccentric. The cams may comprise a stainless steel cam body and have a polymeric sleeve 26 such as ultra high molecular weight (UHMW) polyethylene to reduce the wear on the conveyor, such as Polystone M-natural from Röchling Engineering Plastics KG or Material S+OIL from Murtfeldt GmbH.

Any known materials may be used for the construction of the cams and camshafts.

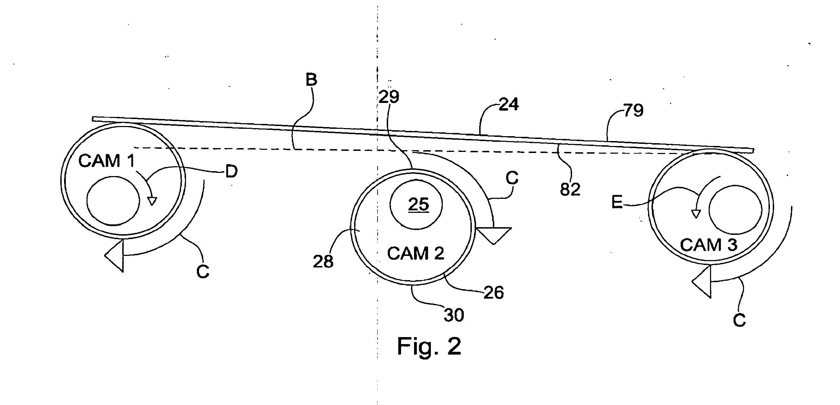

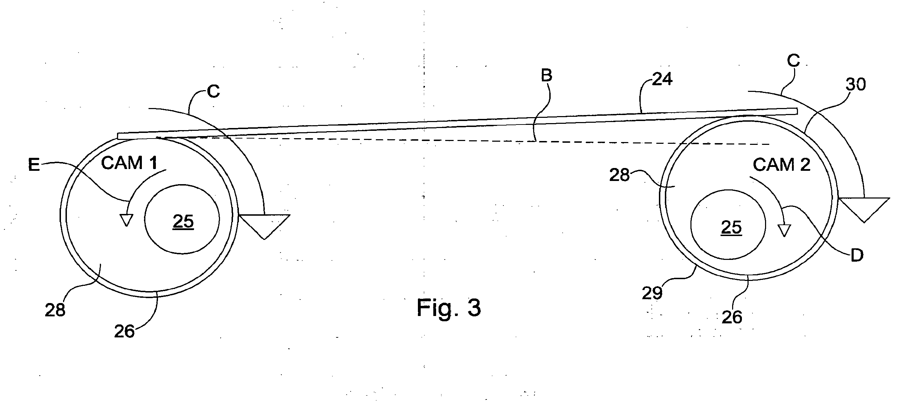

Figure 2 shows a partial side view of one embodiment of an agitation assembly consisting of three camshafts 25 each having a plurality of cams connected to each camshaft and a portion of the conveyor 24. (The conveyor is shown as a solid line; however, the conveyor typically comprises stainless steel links or a mesh weave that might be somewhat flexible.) Additionally, Figure 2 shows the phasing of the cams 28 that are on those camshafts. The cams 28 on each camshaft 25 may each be out of phase with each other, or they may be in phase with each other on each camshaft. As shown in Figure 2, the cams on each camshaft are all connected to each camshaft in the same phase; therefore, in the side view as shown in Figure 2, only one cam 28 is visible on each camshaft 25; the other cams on each camshaft are directly behind the ones shown and are therefore not visible. Further, each camshaft may be installed in the freezer so that the cams thereon are offset by any amount or 90 to 180°, or 90 to 150° or 100 to 140°, or 110 to 130°, or 115 to 125°, or by approximately 120° from the cams on the adjacent camshaft or camshafts in the agitation assembly for an agitation assembly having two or more camshafts. Figure 2 shows CAM 1, CAM 2 and CAM 3 each offset by 120°. In the apparatus CAM 1 is adjacent to CAM 2, and CAM 2 is adjacent to CAM 1 and CAM 3 and so on. Figure 3 shows CAM 1 and CAM 2 as shown in Figure 2 offset 120° but the cams are in a different position from Figure 2 (CAM 3 is not shown in Figure 3). One of the benefits of such cam phasing, in addition to creating a pulse-like vibration of the conveyor, is that the various locations of CAM 1, CAM 2 and CAM 3 can assist the other cams to move the conveyor, thereby decreasing the strain on the agitation motor that drives the shafts that are part of the agitation assembly and utilizing forces which would otherwise result in unwanted or damaging vibrations in the food freezer. As shown in Figure 2, the positive vertical position above the horizontal of CAM 1 (the dashed line B in Figures 2 and 3 indicates the conveyor in a horizontal position, which is the position it would be in if it were not displaced by the agitation assembly, for example, if the apparatus were operating in the non-IQF mode) and the weight of the belt (loaded or unloaded with food product) thereon generates assisting torque (shown by arrows D in Figures 2 and 3) to move CAM 3 which because of the weight of the belt and the lower vertical position provides resisting torque (shown by arrows E in Figures 2 and 3) which must be overcome by the agitation motor that drives the agitation assembly. The cams in Figures 2 and 3 all move in the direction indicated by arrow C which in this embodiment is the same as the direction that the conveyor moves. The assisting torque, arrow D, provided by CAM 1 in Figure 2 helps the agitation motor move the conveyor. As shown in Figure 3, CAM 1 provides resisting torque, arrow E, due to its lower position and CAM 2 provides assisting torque, arrow D, to move the conveyor belt.

When using eccentric cams, and cams may have one heel 29 and one toe 30. Cams having one heel and one toe may have a spherical, elliptical or oval shape or alternative shapes that do not have to be standard geometric shapes that provide a single protruding side or toe. The heel is the part of the periphery of the cam in a side view that is closest to the camshaft and the toe is the periphery of the cam that is furthest to the camshaft. The distance between the heel and the camshaft will be less than the distance between the toe and the camshaft. The heel and the toe may be located on opposite sides of the cam and may be 180° apart from each other. Cams of this design will contact the conveyor once. The cams may be mounted below the conveyor so that when the heel 29 of the cam is closest to the conveyor (as shown for CAM 2 in Figure 2) the cam rotates freely and does not contact the conveyor. When mounted in this way the cam will, due to its rotation and non-contact with the conveyor, increase its vertical component of velocity as it rotates. By adjusting the distance of the cam from the bottom surface or impact surface 82 of the conveyor (the surface of the conveyor to be contacted by the cam) in addition to avoiding contact of the heel of the cam with the conveyor, the momentum and jerk transferred to the conveyor from the cam toe can be increased or maximized. By adjusting the distance of the cam from the bottom surface of the conveyor, the linear vertical velocity transferred to the conveyor by the cam can be maximized.

In one embodiment, it was determined that the cam 28 should be mounted below the conveyor 24 so that it initially contacts the conveyor after rotating approximately 97° from the 0° start position and so that it stopped contacting the conveyor after rotating approximately 262° from the 0° start position. The 0° start position is where the toe 30 of the cam is located furthest from the conveyor. (This position is shown by CAM 2 in Figure 2.) Additionally, in that embodiment, the camshaft was mounted so that there was 9 mm between the heel 29 of the cam 28 and the bottom surface 82 of the conveyor 24 when the heel 29 of the cam 28 was closest to the bottom surface 82 of the conveyor 24. (The distances were measured when the conveyor and the cams were stationary, that is, not operating in the IQF mode; however, the conveyor and the cams were in the position that they would be in if operating.) One alternative embodiment is to have the cam 28 initially contact (the bottom surface 82 of) the conveyor 24 at 90° from the 0° start position and stopping contact with (the bottom surface 82 of) the conveyor after approximately 270° from the 0° start position. In this embodiment an 8mm distance between the heel 29 of the cam and the (bottom surface of the) conveyor 24 is employed. For different shaped cams or cams having different degrees of eccentricity, these numbers will differ depending on the characteristic lift and velocity equations for the particular cam geometry employed. In such embodiments, the camshafts may be mounted below the bottom surface of the conveyor such that the distance between the heel of the cam and the bottom surface of the conveyor is from 7 to 10 mm, and the cams shall initially contact the conveyor from 85 to 100° and release (stop contacting the conveyor) at from 250 to 280° from the 0° start position. The balance of the 360° rotation the cam does not contact the conveyor, such as, from greater than 280° (through 360°) to 85°. (The bottom surface of the conveyor is closest to the cam(s) and is contacted by one or more cams and the top surface of the conveyor is the surface 79 of the conveyor onto which the food product is positioned and carried.) The camshafts may be rotated at any speed including speeds from 50 to 1000, or 100 to 800, or 200 to 600 revolutions per minute when rotated. In the side views of the cams shown in Figures 2 and 3, the cams are from 660 mm to 2,000 mm in length at the greatest distance across the cams (from heel to toe), and the spacing between the camshafts is from 200 mm to 600 mm, or 300 mm to 425 mm.

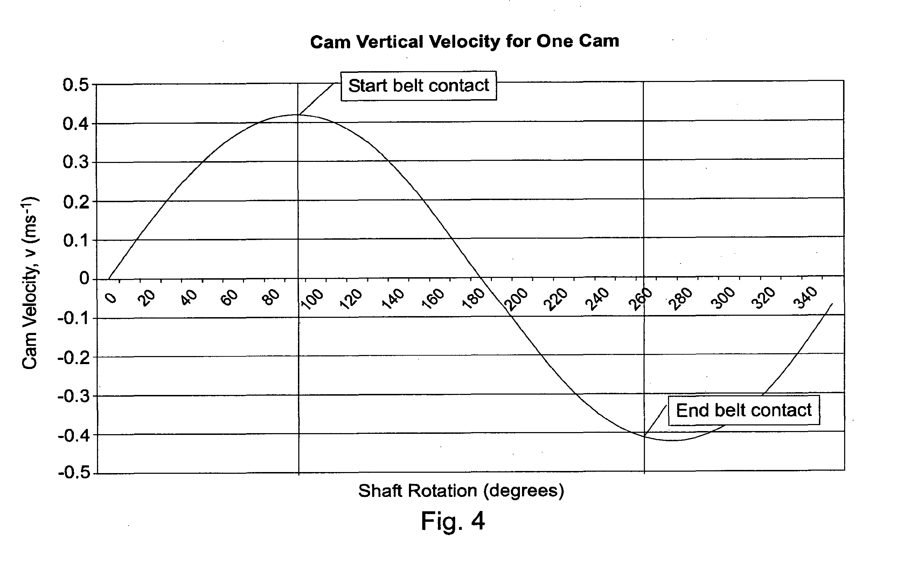

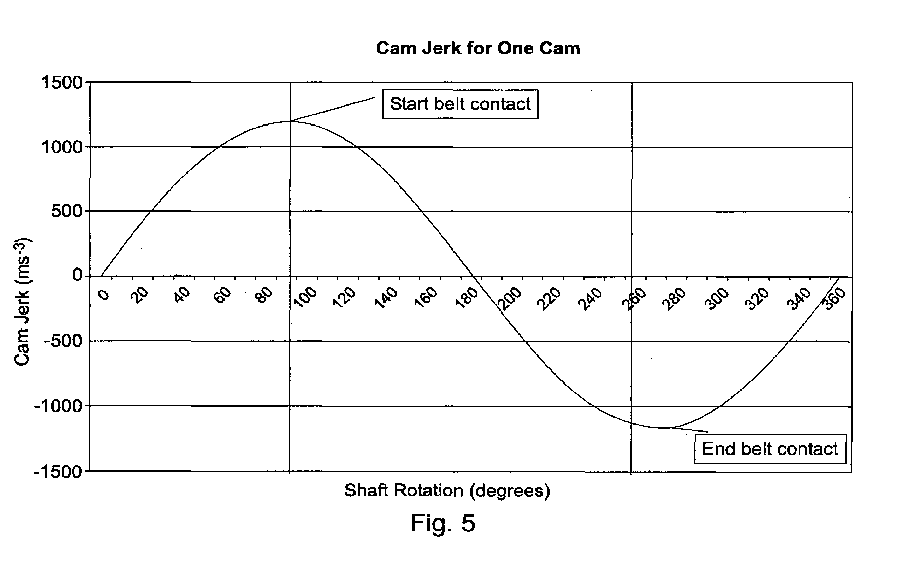

As can be seen from Figures 4, 5 and 8, because the at least one cam in this invention does not remain in contact with the conveyor during its 360° rotation with the camshaft(s), the agitation assembly may be installed in the apparatus such that the vertical component of velocity of the cam reaches a maximum or near maximum just before contacting the conveyor. Figures 4, 5 and 8 were generated for a simple harmonic cam running at a rotational speed of 502 rpm. This invention is designed to take advantage of the velocity increase by installing and operating the camshaft(s) with the cam(s) thereon at a distance below the conveyor such that the cam(s) impact(s) the bottom surface of the conveyor at or near its maximum velocity to provide to the conveyor its maximum jerk or approximately its maximum jerk as shown in Figure 4 and 5 respectively for one cam design. Figures 4, 5 and 8 were generated using formulas applicable to simple harmonic motion cams. The equations are as follows:

Cam lift equation:

$$lift, y = d(1 - cos\theta)$$

Cam velocity equation:

Vertical velocity, $\dfrac{dy}{dx} = v = \omega^2 d \sin\theta$

Cam velocity acceleration:

Acceleration, $a = \omega^2 d \cos\theta$

Cam jerk:

$$\text{Jerk, } j = \omega^3 \, d \sin \theta$$

Where:

- d = eccentricity (mm)

- Θ = cam angle

The same graphs could be generated for cams having different shapes using different formulas to determine the location of the cams below the conveyor such that the cam makes initial contact with the conveyor substantially near the point where its vertical component of velocity is at a maximum during each 360° rotation of the camshaft.

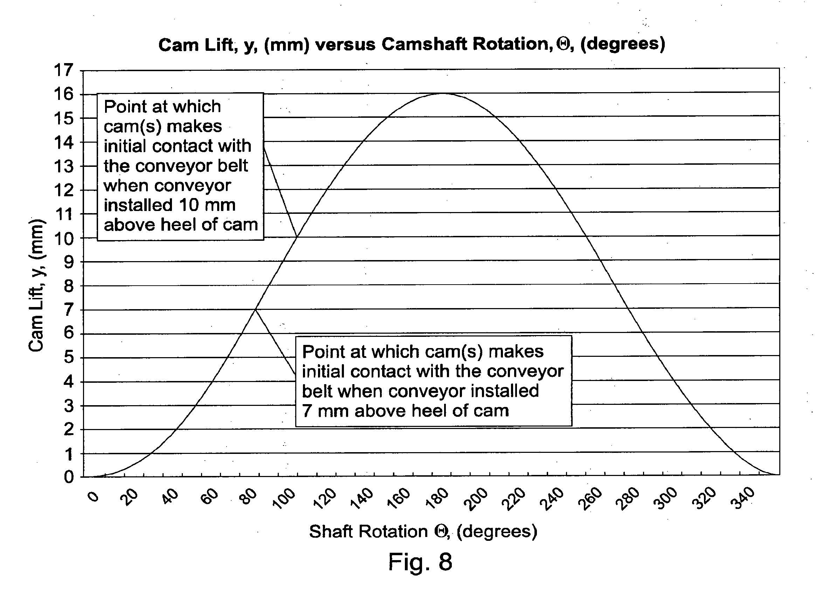

Figure 8 shows the height, termed lift, y, (mm), that one embodiment of a simple harmonic motion cam will travel as it rotates via the camshaft. Figure 8 may be used in conjunction with Figures 4 and 5 to determine the location (distance below the conveyor) to install a cam to maximize the cam's linear vertical velocity. By generating Figure 4 for the cam to be used in a freezer, the location is determined. Figure 4 indicates at what angular rotation from the 0° start position, the maximum velocity will be achieved. Using the angle at the maximum velocity determined from Figure 4, reading the graph at that angle on Figure 8, the height between the heel of the cam and the bottom of the conveyor is determined. The cam lift is the distance below the belt to install the cam. For the cam for which Figures 4, 5 and 8 were generated, this corresponds to a location of the cam below the conveyor belt of from 7 mm to 10 mm, representing points where cam velocity is between 0.407ms⁻¹ at 10mm or cam angle 104.5° and 0.421 ms⁻¹ at 8mm or cam angle 90° at the high speed setting of 502 rpm or 0.084 ms-1 to 0.081 ms-1 at the low speed setting of 200 rpm.

The jerk is the rate of change of acceleration more precisely, the derivative of acceleration with respect to time. Ordinarily, normal cam designs seek to minimize jerk as it affects smoothness of operation and induces high forces which can induce high contact stresses on a machine part contacting the cam. However, for this application, it has been discovered that maximum jerk is desirable and that if the cam(s) is(are) mounted too close or too far from the conveyor, the velocity, and therefore the jerk (which is greatly dependent upon the velocity and acceleration) will not be maximized and consequently the rate of IQF product obtained will be reduced. The jerk varies with the force that the cam contacts the conveyor which varies with the velocity of the cam. The jerk may be maximized by the cam velocity and adjusting the distance between the cam(s) and the conveyor and thereby the contact angles described above between the cam and the conveyor. High rates of jerk rapidly accelerate vertically the conveyor belt from a rest position. At the rotational speed of 502 rpm jerk varies from 1162 ms⁻³ at 90° and 1125 ms⁻³ at cam angle 104.5°. By maximizing the jerk, the vertical velocity transferred to the conveyor and, thereby the transfer of momentum to the food products thereon, may be maximized for a given amount of energy used to run the agitation motor. By maximizing the vertical velocity, the agitation provided to the food products may be efficiently maximized. The jerk of the cams on the conveyor may cause the food to be lifted off the conveyor when operated in the IQF mode.

Another aspect of this invention is the one or more mobile side guides, also referred to herein as the articulated product guides, that are useful in freezers that convey products, whether or not the conveyor is agitated, however, the mobile side guides are particularly suited for a freezer in which the conveyor is vibrated, agitated or moved by any means, or for a freezer in which its conveyor is flexible, and may, for example, deform under the weight of the product to be frozen. When the product is vibrated in IQF freezers, the product is liable to fall from the conveyor unless a means of retention is employed along the one or more sides of the conveyor. One or more mobile side guides are useful in the freezer of this invention to prevent the product from falling off the conveyor when it is vibrated in the IQF mode and also when it is operated in the non-IQF mode. Each articulated product guide may comprise interconnected sections, or articulated sections, that move up and down with the conveyor as the conveyor moves in response to the action of the agitation assembly. The mobile side guide does not substantially resist the conveyor's movement as would be the case if inflexible or stationary product guides were employed. When the mobile side guide is made up of interconnected sections, a damping action improves the performance of each section, keeping the bottom surfaces of the sections in contact with the conveyor, but providing little resistance to the movement of the conveyor to preserve the IQF action. Those sections which are subject to the force of the cams translated through the conveyor would, when the sections are light, be lifted clear off the conveyor when hit by the agitation assembly if they were individual parts that were not interconnected. This would create a space between the conveyor and the side guide and permit pieces of food to fall from the conveyor and reduce the yield of the freezer. However, if they are articulated and interconnected, the individual sections of the mobile side guide can move with the conveyor with most if not all of the sections remaining in contact the top surface of the conveyor.

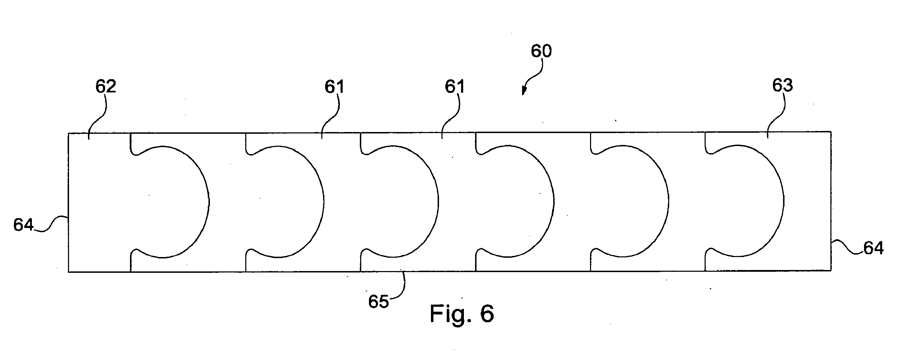

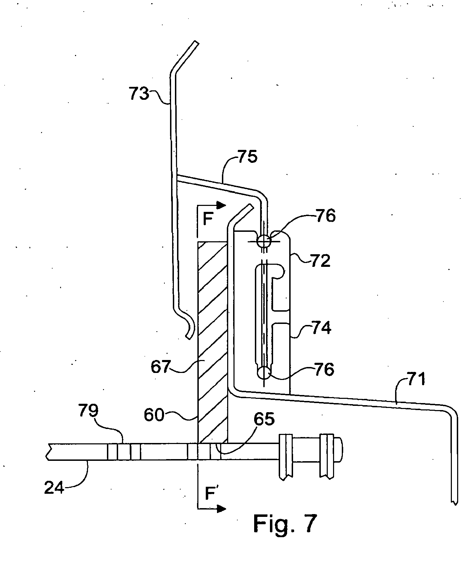

One or more mobile side guides of any length and number of sections can be used in the invention. A mobile side guide 60 is shown in Figure 6 and Figure 7. Figure 6 shows only the mobile side guide along line F-F' as shown in Figure 7. The mobile guide 60 is made up of a plurality of individual sections. In some embodiments, the number of mobile guide sections that contact the conveyor in a mobile guide will be from four to twenty-five, or eight to twenty. In one embodiment the section (articulated sections) are made up of polymer (plastic) that may be machined into individual polymeric sections that may be linked by one or more separate linking pieces or joints, or snapped together or fitted together like puzzle pieces or otherwise interconnected in such a way that the mobile guide sections can move up and down with the conveyor, while maintaining contact with the conveyor. Alternatively, the sections may comprise any material, such as stainless steel.

As shown in Figure 6, the mobile side guide 60 comprises multiple sections that were machined or formed into three different shapes and then (fitted together). The majority of the sections making up the mobile side guide shown in Figure 6 take the form of interconnecting sections 61, and there are two end sections, first end section 62, and second end section 63. As shown, the end sections of the mobile guide 60 have straight edges; however, the edges 64 can be any shape depending upon the design of the retainer which holds the mobile guide in place in the freezer apparatus in which it is used. When held in position by a retainer, when the side guide is interconnected, the sections form a flexible, articulated side guide which allows the side guide to bend along its length between the sections to move up and down with the movement of the conveyor while maintaining contact with the conveyor belt. Other methods for interlinking the side guides include connection of each to a chain, cord, band or another linking member that will allow interconnected movement or flexibility between the sections. Although Figure 6 shows only one embodiment, the sections can have any shapes that flexibly fit together and may be interconnected.

Figure 7 shows a partial cross-section of one side of the freezer along the line G-G' in Figure 1 showing a portion of the conveyor on that side of the freezer and one mobile side guide held by a retaining means when assembled in the freezer where the bottom surfaces 65 of the sections of the mobile side guide contact the conveyor.

Figure 7 shows the mobile side guide 60 held in place by a retainer 70 that may be directly or indirectly attached to the side wall, top or the bottom of the freezer or another suitable mounting place. The retainer 70 as shown comprises a back plate 71 that, in this embodiment, is at least the length of the mobile side guide and is attached, in this case, to the conveyor belt support racks (not shown) by a fixed bracket or welding (not shown). The retainer further comprises a front plate 73 that, in this embodiment, is at least the length of the mobile side guide. The front and back plates are stationary during the operation of the freezer. On the other hand, the mobile side guide is inserted or mounted between the front plate 73 and the back plate 71 such that the mobile side guide may freely move up and down between the front and back plates when the conveyor pushes the one or more sections of mobile side guide up and the one or more sections of the mobile side guide will follow the conveyor's movement down under the force of gravity. Trapped between the front plate 73, the back plate 71 and the conveyor 24, the mobile side guide 60 remains in position, such that the bottom surface 65 of the mobile side guide remains in contact with the top surface 79 of the conveyor 24. Alternatively, the front plate and the back plate may provide some tension against the movement of the mobile side guide. Typically the bottom surface of the mobile side guide, that is, the conveyor contacting surface, and/or the bottom surfaces of the sections of the mobile side guide, are substantially flat.

The front plate 73 is held in position relative to the back plate 71 by one or more dismountable brackets 72 that each comprise an attachment part 74 (welded, or otherwise attached) to the back of the back plate 71, one or more bars 75 (welded, or otherwise attached) to the front plate 73 that fit into the attachment part 74 of the dismountable bracket 72 and are removably attached thereto by attachment means 76. The attachment means 76 may be stainless steel rods, nuts, slotted clamps and/or bolts. The attachment means, the front plate and the mobile side guide are designed to be easily removable for cleaning. More than one dismountable bracket and corresponding more than one bar attached to the front plate may be used to hold a mobile side guide in place. If so, they are spaced along the length of the back plate and the front plate to hold the mobile side guide in place. In one embodiment there are two dismantable brackets provided for every 2 meters of side guide. Additionally, the retainer may comprise one or more endpieces (not shown) that prevent the mobile side guide from moving horizontally, which may be necessary in the direction that the conveyor moves or at both ends of the mobile side guide. In one embodiment the endpiece of the retainer 70 may comprise a front plate that is turned at one or both of its ends around the side 67 of the mobile side guide 60 to contact or nearly contact the back plate 71, thereby enclosing or partially enclosing the mobile side guide 60 therein. Alternatively, separate stationary endpieces of the retainer may be provided to trap the mobile side guide within the retainer.

Alternative embodiments of retainers for the mobile side guide include stationary brackets attached to stationary parts of the freezer and also attached at each end section or at a section of the mobile side guide that remains stationary. For example, the stationary brackets can be attached (for example bolted, welded) to one or more sections of the mobile side guide in an area of the conveyor that is not agitated. The sections that are bolted to that stationary brackets may be machined so that they do not contact the surface of the conveyor.

The dimensions of the mobile side guides and the sections that they comprise can be any as needed and are typically dependent upon the requirements for the freezer, including, the spacing of the agitation assemblies, the space in the freezer including the space in the freezer above the conveyor and along the conveyor sides, the area (length) of the conveyor that is affected by the agitation assemblies and the number of agitation assemblies in the freezer. The dimensions of the mobile side guides may be from 0.5 to 3 meters, 1 to 2 meters, or approximately 1.5 meters in length. The typical dimensions of the sections of the mobile side guides may be approximately 75 to 150 mm in height and approximately 50 to 250 mm in length and approximately from 10 to 20 mm in thickness. If the sections are too long then the flexibility of the mobile side guides may be insufficient to conform to the contour of the agitated conveyor and will result in the loss of food product between the bottom surfaces of the mobile side guide sections and the top surface of the conveyor when agitated as the sections of the mobile side guides move with the conveyor.

One or more mobile side guides of the same or various lengths may be installed anywhere in the freezer between the inlet and the outlet. One or more mobile side guides may be installed along the entire length that a conveyor in a freezer carries product. Alternatively, the mobile side guides may be installed in the freezer only in the areas of the freezer in which the conveyor may be agitated by agitation means that may be one or more of the agitation assemblies disclosed herein or may be agitation means of any design. Typically the one or more mobile side guides are located on both sides of the conveyor. Typically the mobile side guides are mounted in pairs on each side of the conveyor at least along and in contact with both sides of the conveyor where the one or more agitation assemblies are located. In embodiments of this invention, stationary side guides may be used in a freezer where the conveyor is not agitated and mobile side guides may be used in the same freezer where the conveyor is agitated.

Alternatively the mobile side guide may comprise sections that are not interconnected, but that individually move with the conveyor. One embodiment of a mobile side guide may comprise individual shaped sections, that for example may be rectangular, that are not interconnected but that are mounted in the freezer so that the mobile side guide and its sections are trapped on all 4 sides by parts of the retainer, and the conveyor at its bottom surface to hold it in place. Further, a top piece to the retainer may be provided to limit the vertical movement of the sections. Horizontal and vertical movement of the sections may also be limited by friction between the sections and the parts of the retainer that contact the sections.

**Claims**

1. An apparatus for chilling or freezing products which may be operated in the IQF and non-IQF modes, comprising:

    a conveyor for transporting products through a refrigeration medium in the IQF and non-IQF modes, said conveyor having a top surface and a bottom surface;
    a conveyor motor to move said conveyor;
    at least one agitation assembly comprising at least one cam attached to at least one camshaft, said at least one camshaft rotatably mounted below said bottom surface of said conveyor, such that the cam makes initial contact with the conveyor when the cam's vertical component of velocity is at or near its maximum during each 360° rotation of the camshaft; and
    an independently controlled agitation motor operatively associated with the at least one agitation assembly to operate the agitation assembly to cause the agitation of the conveyor and the products thereon when said apparatus is operated in the IQF mode, wherein said at least one cam is located such that the linear vertical velocity is maximized just before said at least one cam strikes said conveyor.

2. The apparatus of claim 1 wherein said at least one camshaft is mounted in a fixed location below said bottom surface of said conveyor.

3. The apparatus of claim 1 or 2 wherein said at least one cam comprises a polymeric sleeve thereon.

4. The apparatus of any preceding claim further comprising an agitation assembly comprising between from three to twelve camshafts having one or more cams on each camshaft and wherein one or more cams on each camshaft of said agitation assembly are from 90 to 180° out of phase with the one or more cams on the one or more adjacent camshafts.

5. The apparatus of any one of claims 1 to 3 further comprising an agitation assembly comprising between from three to twelve camshafts having one or more cams on each camshaft and wherein one or more cams on each camshaft of said agitation assembly are from 110 to 130° out of phase with the one or more cams on the one or more adjacent camshafts.

6. The apparatus of any preceding claim further wherein each of said camshafts comprises a plurality of cams and the plurality of cams on each camshaft are all attached to the camshaft in phase.

7. The apparatus of any preceding claim wherein the spacing between the camshafts is from 300mm to 400mm and the camshafts rotate at a speed from 200 to 600 rotations per minute.

8. The apparatus of any preceding claim, wherein said at least one cam comprises a heel and a toe, and wherein the bottom surface of the conveyor is 7 mm to 10 mm above the heel of said at least one cam.

9. An apparatus according to any one of the preceding claims, the apparatus comprising a first agitation assembly having a first agitation motor operatively associated with said first agitation assembly, and a second agitation assembly having a second agitation motor operatively associated with the second agitation assembly, wherein said first and second agitation motors are independently controlled, and can each operate at no speed, the same or different speeds as long as at least one of the first and second agitation motors is operating to displace the conveyor and the products thereon when said apparatus is operated to the IQF mode.

10. The apparatus of claim 9 further comprising a third agitation assembly having a third agitation motor operatively associated with the third agitation assembly, wherein said first, second and third agitation motors are independently controlled, and can each operate at different speeds, the same speeds or no speed as long as at least one of the first, second and third agitation motors is operating to displace the conveyor and the products thereon when said apparatus is operated in the IQF mode.

11. An apparatus according to any one of the preceding claims, wherein said apparatus further comprises at least one mobile side guide contacting said conveyor.

12. The apparatus of claim 11 wherein said apparatus further compises two mobile side guides, each of said mobile side guides being mounted on opposite sides of said conveyor.

13. A method of chilling or freezing a food product in an apparatus comprising the steps of:

conveying said food product on a conveyor through said apparatus;
agitating said conveyor by the operation of one or more agitation assemblies comprising at least one cam by impacting the bottom surface of the conveyor such that the cam makes initial contact with the conveyor when a vertical component of velocity for said cam is at or near its maximum during each 360° rotation of the camshaft;
controlling the agitation by one or more agitation assemblies, each being operably controlled by one or more agitation motors; and
turning off said one or more agitation motors to switch between IQF and non-IQF modes of operating said apparatus.

14. The method of claim 13 wherein said method further comprises before said turning off step the step of:

increasing or decreasing the agitation provided by one or more agitation assemblies by controlling one or more agitation motors.

15. The method of claim 13 or 14 further comprising the step of:

preventing the loss of food from said conveyor by one or more mobile side guides that move with said agitated conveyor.

**Patentansprüche**

1. Vorrichtung zum Kühlen oder Gefrieren von Produkten, welche in den IQF- und Nicht-IQF-Modi betrieben werden kann, umfassend:

eine Förderanlage zum Transportieren von Produkten durch ein Kältemedium in den IQF- und Nicht-IQF-Modi, wobei die Förderanlage eine Oberseite und eine Unterseite aufweist,
einen Fördermotor zum Bewegen der Förderanlage;
mindestens eine Bewegungsanordnung, die mindestens einen Nocken umfasst, welcher an mindestens einer Nockenwelle befestigt ist, wobei die mindestens eine Nockenwelle drehbar unter der Unterseite der Förderanlage angebracht ist, so dass der Nocken ersten Kontakt mit der Förderanlage herstellt, wenn die vertikale Geschwindigkeitskomponente des Nockens an oder nahe ihrem Maximum während jeder 360° Rotation der Nockenwelle ist, und
einen unabhängig gesteuerten Bewegungsmotor, der betriebsmäßig mit der mindestens einen Bewegungsanordnung verbunden ist, um die Bewegungsanordnung zu betreiben, um somit die Bewegung der Förderanlage und der Produkte darauf zu bewirken, wenn die Vorrichtung im IQF-Modus betrieben wird, wobei der mindestens eine Nocken derart angeordnet ist, dass die lineare Vertikalgeschwindigkeit, unmittelbar bevor der mindestens eine Nocken auf die Förderanlage trifft, maximiert wird.

2. Vorrichtung nach Anspruch 1, wobei die mindestens eine Nockenwelle in einer festen Position unterhalb der Unterseite der Förderanlage angebracht ist.

3. Vorrichtung nach Anspruch 1 oder 2, wobei der mindestens eine Nocken eine polymere Hülse darauf umfasst.

4. Vorrichtung nach einem der vorhergehenden Ansprüche, ferner umfassend eine Bewegungsanordnung, die zwischen drei und zwölf Nockenwellen mit einem oder mehreren Nocken auf jeder Nockenwelle umfasst und wobei ein oder mehrere Nocken auf jeder Nockenwelle der Bewegungsanordnung um 90 bis 180° gegenphasig zu einem oder mehreren Nocken auf der einen oder mehreren benachbarten Nockenwellen verlaufen.

5. Vorrichtung nach einem der Ansprüche 1 bis 3, ferner umfassend eine Bewegungsanordnung, die zwischen drei und zwölf Nockenwellen mit einem oder mehreren Nocken auf jeder Nockenwelle umfasst und wobei ein oder mehrere Nocken auf jeder Nockenwelle der Bewegungsanordnung um 110 bis 130° gegenphasig zu einem oder mehreren Nocken auf der einen oder mehreren benachbarten Nockenwellen verlaufen.

6. Vorrichtung nach einem der vorhergehenden Ansprüche, wobei ferner jede der Nockenwellen eine Vielzahl von Nocken umfasst und die Vielzahl von Nocken auf jeder Nockenwelle alle gleichphasig an der Nockenwelle angebracht sind.

7. Vorrichtung nach einem der vorhergehenden Ansprüche, wobei der Abstand zwischen den Nockenwellen 300 mm bis 400 mm beträgt und sich die Nockenwellen mit einer Geschwindigkeit von 200 bis 600 Umdrehungen pro Minute drehen.

8. Vorrichtung nach einem der vorhergehenden Ansprüche, wobei der mindestens eine Nocken eine Ferse und eine Spitze umfasst und wobei die Unterseite der Förderanlage 7 mm bis 10 mm oberhalb der Ferse des mindestens einen Nockens liegt.

9. Vorrichtung nach einem der vorhergehenden Ansprüche, wobei die Vorrichtung eine erste Bewegungsanordnung mit einem ersten Bewegungsmotor, der betriebsmäßig mit der ersten Bewegungsanordnung verbunden ist, und eine zweite Bewegungsanordnung mit einem zweiten Bewegungsmotor, der betriebsmäßig mit der zweiten Bewegungsanordnung verbunden ist, umfasst, wobei der erste und zweite Bewegungsmotor unabhängig voneinander gesteuert werden und jeder jeweils ohne Geschwindigkeit, der gleichen oder unterschiedlichen Geschwindigkeiten arbeiten kann, solange mindestens einer des ersten und zweiten Bewegungsmotoren arbeitet, um die Förderanlage und die Produkte darauf zu verschieben, wenn die Vorrichtung im IQF-Modus betrieben wird.

10. Vorrichtung nach Anspruch 9, ferner umfassend eine dritte Bewegungsanordnung mit einem dritten Bewegungsmotor, der betriebsmäßig mit der dritten Bewegungsanordnung verbunden ist, wobei der erste, zweite und dritte Bewegungsmotor unabhängig voneinander gesteuert werden und jeder jeweils bei unterschiedlichen Geschwindigkeiten, den gleichen Geschwindigkeiten oder keiner Geschwindigkeit arbeiten kann, solange mindestens einer des ersten, zweiten und dritten Bewegungsmotoren arbeitet, um das Förderband und die Produkte darauf zu verschieben, wenn die Vorrichtung im IQF-Modus betrieben wird.

11. Vorrichtung nach einem der vorhergehenden Ansprüche, wobei die Vorrichtung ferner mindestens eine bewegliche Seitenführung umfasst, die die Förderanlage berührt.

12. Vorrichtung nach Anspruch 11, wobei die Vorrichtung ferner zwei bewegliche Seitenführungen umfasst, wobei jede der beweglichen Seitenführungen auf gegenüberliegenden Seiten der Förderanlage angebracht ist.

13. Verfahren zum Kühlen oder Gefrieren eines Lebensmittels in einer Vorrichtung, umfassend die Schritte des:

   Beförderns des Nahrungsmittelprodukts auf einer Förderanlage durch die Vorrichtung;
   Bewegens der Förderanlage durch den Betrieb einer oder mehrerer Bewegungsanordnungen, die mindestens einen Nocken umfassen, durch Einwirken auf die Unterseite der Förderanlage, so dass der Nocken ersten Kontakt mit der Förderanlage herstellt, wenn die vertikale Geschwindigkeitskomponente des Nockens an oder nahe ihrem Maximum während jeder 360° Rotation der Nockenwelle ist;
   Steuerns der Bewegung durch eine oder mehrere Bewegungsanordnungen, wobei jede betriebsmäßig von einem oder mehreren Bewegungsmotoren gesteuert wird; und
   des Ausschaltens des einen oder mehrerer Bewegungsmotoren, um zwischen den IQF- und Nicht-IQF-Modi des Betriebs der Vorrichtung zu wechseln.

14. Verfahren nach Anspruch 13, wobei das Verfahren ferner vor dem Schritt des Ausschaltens den Schritt des Erhöhens oder Verringerns der Bewegung, die durch eine oder mehrere Bewegungsanordnungen bereitgestellt wird, durch Steuern von einem oder mehreren Bewegungsmotoren, umfasst.

15. Verfahren nach Anspruch 13 oder 14, ferner umfassend den Schritt des:

   Verhinderns des Verlustes von Nahrungsmitteln aus der Förderanlage durch eine oder mehreren bewegliche Seitenführungen, welche sich mit der bewegten Förderanlage mitbewegen.

**Revendications**

1. Appareil pour réfrigérer ou congeler des produits, qui peut être mis en fonctionnement dans les modes IQF et non-IQF, comprenant :

   un convoyeur pour convoyer des produits à travers un milieu de réfrigération dans les modes IQF et non-IQF, ledit convoyeur possédant une surface supérieure et une surface inférieure ;
   un moteur de convoyeur pour déplacer ledit convoyeur ;
   au moins un ensemble d'agitation comprenant au moins une came fixée à au moins un arbre à cames, ledit au moins un arbre à cames étant monté de façon rotative sous ladite surface inférieure dudit convoyeur, de sorte que la came réalise un contact initial avec le convoyeur lorsque la composante verticale de vitesse de la came est à ou proche de son maximum durant chaque rotation de 360° de l'arbre à cames ; et
   un moteur d'agitation commandé indépendamment associé fonctionnellement à l'au moins un ensemble d'agitation pour mettre en fonctionnement l'ensemble d'agitation pour entraîner l'agitation du convoyeur et des produits sur celui-ci lorsque ledit appareil est mis en fonctionnement dans le mode IQF, dans lequel ladite au moins une came est située de sorte que la vitesse verticale linéaire soit maximisée juste avant que ladite au moins une came touche ledit convoyeur.

2. Appareil selon la revendication 1, dans lequel ledit au moins un arbre à cames est monté dans un emplacement fixe sous ladite surface inférieure dudit convoyeur.

3. Appareil selon la revendication 1 ou 2, dans lequel ladite au moins une came comprend un manchon polymère sur celle-ci.

4. Appareil selon une quelconque revendication précédente, comprenant en outre un ensemble d'agitation comprenant entre trois et douze arbres à cames possédant une ou plusieurs cames sur chaque arbre à cames et dans lequel une ou plusieurs cames sur chaque arbre à cames dudit ensemble d'agitation sont de 90 à 180° hors de phase avec les une ou plusieurs cames sur les un ou plusieurs arbres à cames adjacents.

5. Appareil selon une quelconque des revendications 1 à 3, comprenant en outre un ensemble d'agitation comprenant de trois à douze arbres à cames possédant une ou plusieurs cames sur chaque arbre à cames et dans lequel une ou plusieurs cames sur chaque arbre à cames dudit ensemble d'agitation sont de 110 à 130° hors de phase avec les une ou plusieurs cames sur les un ou plusieurs arbres à cames adjacents.

6. Appareil selon une quelconque revendication précédente, dans lequel en outre chacun desdits arbres à cames comprend une pluralité de cames et la pluralité de cames sur chaque arbre à cames sont toutes fixées à l'arbre à cames en phase.

7. Appareil selon une quelconque revendication précédente, dans lequel l'espacement entre les arbres à cames est de 300 mm à 400 mm et les arbres à cames tournent à une vitesse de 200 à 600 rotations par minute.

8. Appareil selon une quelconque revendication précédente, dans lequel ladite au moins une came comprend un talon et une pointe, et dans lequel la surface inférieure du convoyeur est 7 mm à 10 mm au-dessus du talon de ladite au moins une came.

9. Appareil selon une quelconque des revendications précédentes, l'appareil comprenant un premier ensemble d'agitation possédant un premier moteur d'agitation associé fonctionnellement audit premier ensemble d'agitation, et un deuxième ensemble d'agitation possédant un deuxième moteur d'agitation associé fonctionnellement au deuxième ensemble d'agitation, dans lequel lesdits premier et deuxième moteurs d'agitation sont commandés indépendamment, et peuvent chacun fonctionner à une vitesse nulle, à la même vitesse ou à des vitesses différentes du moment qu'au moins un des premier et deuxième moteurs d'agitation fonctionne pour déplacer le convoyeur et les produits sur celui-ci lorsque ledit appareil est mis en fonctionnement dans le mode IQF.

10. Appareil selon la revendication 9, comprenant en outre un troisième ensemble d'agitation possédant un troisième moteur d'agitation associé fonctionnellement au troisième ensemble d'agitation, dans lequel lesdits premier, deuxième et troisième moteur d'agitation sont commandés indépendamment, et peuvent chacun fonctionner à des vitesses différentes, aux mêmes vitesses ou à une vitesse nulle du moment qu'au moins un des premier, deuxième et troisième moteurs d'agitation fonctionne pour déplacer le convoyeur et les produits sur celui-ci lorsque ledit appareil est mis en fonctionnement dans le mode IQF.

11. Appareil selon une quelconque des revendications précédentes, dans lequel ledit appareil comprend en outre au moins un guidage latéral mobile entrant en contact avec ledit convoyeur.

12. Appareil selon la revendication 11, dans lequel ledit appareil comprend en outre deux guidages latéraux mobiles, chacun desdits guidages latéraux mobiles étant monté sur des côtés opposés dudit convoyeur.

13. Procédé pour réfrigérer ou congeler un produit alimentaire dans un appareil comprenant les étapes :

de convoi dudit produit alimentaire sur un convoyeur à travers ledit appareil ;
d'agitation dudit convoyeur par le fonctionnement d'un ou de plusieurs ensembles d'agitation comprenant au moins une came en créant un impact sur la surface inférieure du convoyeur de sorte que la came réalise contact initial avec le convoyeur lorsqu'une composante verticale de vitesse pour ladite came est à ou proche de son maximum durant chaque rotation de 360° de l'arbre à cames ;
de commande de l'agitation par un ou plusieurs ensembles d'agitation, chacun étant commandé de façon fonctionnelle par un ou plusieurs moteurs d'agitation ; et
d'arrêt dudit ou desdits moteurs d'agitation pour commuter entre des modes IQF et non-IQF de mise en fonctionnement dudit appareil.

14. Procédé selon la revendication 13, dans lequel ledit procédé comprend en outre, avant ladite étape d'arrêt, l'étape :

d'augmentation ou la réduction de l'agitation fournie par un ou plusieurs ensembles d'agitation en commandant un ou plusieurs moteurs d'agitation.

15. Procédé selon la revendication 13 ou 14, comprenant en outre l'étape :

de prévention de la perte d'aliment à partir dudit convoyeur par un ou plusieurs guidages latéraux mobiles qui se déplacent avec ledit convoyeur agité.

Fig. 1

EP 2 405 762 B1

Fig. 2

Fig. 3

**Cam Vertical Velocity for One Cam**

Fig. 4

**Cam Jerk for One Cam**

Fig. 5

Fig. 6

Fig. 7

**Cam Lift, y, (mm) versus Camshaft Rotation, Θ, (degrees)**

Point at which cam(s) makes initial contact with the conveyor belt when conveyor installed 10 mm above heel of cam

Point at which cam(s) makes initial contact with the conveyor belt when conveyor installed 7 mm above heel of cam

Cam Lift, y, (mm)

Shaft Rotation Θ, (degrees)

## Fig. 8

**EP 2 405 762 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61159672 B
- US 7296431 B

- EP 1426715 A